# EUROPÄISCHE PATENTSCHRIFT

(11) **EP 2 942 850 B1**
(45) Veröffentlichungstag und Bekanntmachung des Hinweises auf die Patenterteilung: **14.08.2019**
(21) Anmeldenummer: 14167133.9
(22) Anmeldetag: 06.05.2014
(51) Int. Cl.: G02B 6/00, H02H 1/00, H02H 3/04, G02B 6/32, H01H 9/50

(54) **LICHTBOGENSENSOR UND LICHTBOGENERFASSUNGSEINRICHTUNG MIT EINEM OPTISCHEN LICHTBOGENSENSOR**
OPTICAL ARCING DETECTOR AND ARC DETECTING DEVICE WITH SUCH DETECTOR
CAPTEUR D'ARC LUMINEUX ET DISPOSITIF DE DÉTECTION D'ARC LUMINEUX DOTÉ D'UN CAPTEUR D'ARC LUMINEUX

(43) Veröffentlichungstag der Anmeldung: 11.11.2015
(73) Patentinhaber: Siemens Aktiengesellschaft, 80333 München (DE)
(72) Erfinder: Klimke, Jens, 14612 Falkensee (DE); Schöller, Siegfried, 94078 Freiung (DE)

(56) Entgegenhaltungen:
- WO-A1-92/10845
- DE-A1- 19 757 844

## Beschreibung

Die Erfindung betrifft einen optischen Lichtbogensensor zur Erfassung eines Lichtbogens in einer elektrischen Anlage mit einem einen Gehäuseboden und einen auf den Gehäuseboden aufsetzbaren Gehäusedeckel aufweisenden Sensorgehäuse, einem ersten Lichtleiter, dessen eines Ende zur Erfassung eines von einem Lichtbogen erzeugten Lichtsignals innerhalb des Sensorgehäuses angeordnet ist, einem zweiten Lichtleiter, dessen eines Ende zur Aussendung eines Prüflichtsignals innerhalb des Sensorgehäuses angeordnet ist, wobei die innerhalb des Sensorgehäuses angeordneten Enden der beiden Lichtleiter miteinander in optischer Verbindung stehen, das Sensorgehäuse eine Führung aufweist, die die beiden Lichtleiter innerhalb des Sensorgehäuses derart führt, dass ihre jeweiligen Enden in einem Lichterfassungsbereich parallel zueinander und direkt aufeinander zu gerichtet angeordnet sind, der Gehäusedeckel im Wesentlichen flach ausgebildet ist und im Bereich des Lichterfassungsbereichs eine nach außen gerichtete Wölbung aufweist, die aus demselben Material ausgestaltet ist wie der Gehäusedeckel, und die Führung derart ausgeformt ist, dass die den innerhalb des Sensorgehäuses angeordneten Enden der Lichtleiter abgewandten Enden an derselben Seite des Sensorgehäuses aus dem Sensorgehäuse herausgeführt werden und wobei die Führung derart ausgestaltet ist, dass beide Lichtleiter innerhalb des Sensorgehäuses achsensymmetrisch sind und im Wesentlichen dieselbe, aufeinander zu gerichtete Krümmung erfahren.

Lichtbögen in elektrischen Anlagen, beispielsweise in elektrischen Mittelspannungsschaltschränken, entstehen durch einen Spannungsüberschlag aufgrund eines Fehlers (z.B. eines Kurzschlusses), der beispielsweise von einer schadhaften Isolierung herrühren kann. Da bei einem solchen Lichtbogen kurzfristig große Energiemengen freigesetzt werden, können BeSchädigungen der elektrischen Anlage und ernsthafte Bedrohungen für Leib und Leben von Betreibern der elektrischen Anlage resultieren. Daher sind bei auftretenden Lichtbögen in elektrischen Anlagen sofortige Gegenmaßnahmen zu ergreifen, um den Lichtbogen möglichst umgehend zu unterbrechen. Hierzu wird üblicherweise durch Öffnen einer Schalteinrichtung der Stromfluss innerhalb der elektrischen Anlage unterbrochen, so dass der Lichtbogen zum Erlöschen kommt. Daneben sind unter Umständen auch vorausschauend kleinere Spannungsüberschläge, mit denen sich ein Lichtbogen andeuten kann, zu erkennen, um durch die Durchführung von Gegenmaßnahmen die Gefahr eines größeren Lichtbogens zu verringern.

Zur Erkennung eines Lichtbogens ist es bekannt, optische Lichtbogensensoren einzusetzen. Diese erkennen die vom Lichtbogen abgegebene elektrooptische Strahlung, die im Bereich von sichtbarem Licht liegen kann, daneben oder alternativ aber auch andere, für den Menschen nicht sichtbare Wellenlängenanteile umfassen kann. Im Folgenden wird die bei einem Lichtbogen entstehende elektrooptische Strahlung zusammengefasst vereinfacht als "Licht" bzw. als "Lichtsignal" bezeichnet. Neben aktiven Sensoren, bei denen elektrisch aktive Elemente (z.B. Photodioden, Photowiderstände, etc.) direkt an der Stelle der Erfassung des Lichts angeordnet sind, werden üblicherweise passive Sensoren eingesetzt, bei denen das erfasste Licht an den entfernt angeordneten aktiven Teil des Sensors weitergeleitet wird. Zur Weiterleitung werden häufig optische Fasern, sogenannte Lichtleiter, eingesetzt. Der Vorteil der passiven Sensoren liegt insbesondere darin, dass weniger verschleißanfällige Teile direkt in der überwachten elektrischen Anlage angeordnet sind. Es ist ferner bekannt, die Funktionsfähigkeit solcher Sensoren zu überwachen, indem den Sensoren Prüflichtsignale zugeführt werden, die sie bei einwandfreiem Betrieb entsprechend an den aktiven Teil des Sensors weiterleiten, wo sie unter Erkennung einer ordnungsgemäßen Funktionsfähigkeit ausgewertet werden.

Ein optischer Sensor der eingangs genannten Art ist beispielsweise aus der US-Patentschrift US 8,319,173 B2 bekannt. Der bekannte optische Lichtbogensensor weist ein aus einem Gehäuseboden und einem Gehäusedeckel bestehendes Sensorgehäuse auf, in dem zwei Lichtleiter angeordnet sind. Einer der Lichtleiter dient hierbei zur Erfassung des Lichtes. Der andere Lichtleiter dient zur Übertragung eines Prüflichtsignals im Rahmen der Selbstüberwachung des Sensors. Die Enden der beiden Lichtleiter stehen in optischem Kontakt und sind dabei schräg zueinander ausgerichtet, so dass einerseits Licht eines Lichtbogens von außen in die Stirnfläche des ersten Lichtleiters eintreten kann und andererseits ein Teil des Prüflichtsignals von dem Ende des zweiten Lichtleiters in den ersten Lichtleiter eingekoppelt wird.

Durch die schräg aufeinander ausgerichteten Enden der Lichtleiter entstehen jedoch Streuverluste bei der Einkopplung des Prüflichtsignals, die aufgrund der damit verbundenden Dämpfung des Prüflichtsignals die maximal mögliche Länge der Lichtleiter reduzieren bzw. eine vergleichsweise hohe Sendeleistung beim Aussenden des Prüflichtsignals erforderlich machen.

Ein anderes Beispiel eines Lichtbogensensors mit Selbstüberwachung ist ferner aus der Offenlegungsschrift DE 28 56 188 bekannt. Bei dem hieraus bekannten Lichtbogensensor sind die beiden Lichtleiter axial zueinander in dem Lichtbogensensor geführt und es findet durch Reflexion an einer verspiegelten Fläche eine Umlenkung des Prüflichtsignals in Richtung des empfangenden Lichtleiters statt, wobei das Prüflichtsignal hierbei zunächst einen Teil der überwachten elektrischen Anlage durchläuft, um auch eine Trübung der äußeren Sensorteile in empfindlicher Weise erkennen zu können. Gemäß einem anderen aus derselben Offenlegungsschrift bekannten Ausführungsbeispiel ist der das Prüflichtsignal in den Sensor einbringende Lichtleiter um 180° umgebogen, so dass das Prüflichtsignal ohne die Notwendigkeit eines Reflektors zuerst durch einen Teil des elektrischen Anlage und dann in den empfangenden Lichtleiter eingekoppelt werden kann.

Der bekannte optische Lichtbogensensor ist jedoch vergleichsweise anfällig gegen Umgebungslichteinstrahlung, das beispielsweise von anderen Lichtquellen in der elektrischen Anlage hervorgerufen werden kann oder von außen in die Anlage (beispielsweise beim Öffnen einer Schaltschranktür einer Mittelspanungsschaltanlage) eintreten kann. Außerdem ist die korrekte Führung des Prüflichtsignals nur vergleichsweise aufwendig zu gewährleisten.

Der Erfindung liegt, ausgehend von einem optischen Lichtbogensensor der eingangs genannten Art, die Aufgabe zugrunde, einen Lichtbogensensor mit Selbsttestfunktion anzugeben, der bei einfachem konstruktivem Aufbau eine möglichst geringe Dämpfung des Prüflichtsignals gewährleistet und der möglichst unempfindlich gegenüber Umgebungslicht ist, das nicht von einem Lichtbogen herrührt.

Diese Aufgabe wird erfindungsgemäß durch einen gattungsgemäßen optischen Lichtbogensensor gelöst, bei dem die im Gehäusedeckel angeordnete Wölbung hinsichtlich ihres Materials und/oder ihrer Formgebung derart ausgestaltet ist, dass sie eine gewünschte Dämpfung eines von außerhalb des Sensorgehäuses in den Lichterfassungsbereich eintretenden Lichtsignals in der Weise bewirkt, dass nur Lichtsignale mit einer für einen Lichtbogen charakteristischen Ausgangslichtstärke mit einer signifikanten Einlasslichtstärke in den Lichterfassungsbereich eintreten.

Der erfindungsgemäße optische Lichtbogensensor zeichnet sich einerseits durch seine einfache konstruktive Ausgestaltung aus, da er aus nur wenigen Teilen besteht, die zudem sehr einfach als Frästeile oder im Spritzgussverfahren hergestellt werden können. Durch die im Wesentlichen flache Ausgestaltung des Gehäusedeckels wird seine Herstellung weiterhin vereinfacht, hier muss lediglich die nach außen hervortretende Wölbung besonders ausgeformt werden. Dies stellt jedoch beispielsweise im Spritzgussverfahren kein Problem dar, da die Spritzgussform bereits an die endgültige Formgebung abgepasst ist; jedoch kann die Wölbung auch im Fräsverfahren (ggf. mit leichter Stufung) ausgebildet werden. Da die Wölbung im Bereich des Lichterfassungsbereichs des Lichtbogensensors liegt, dient sie zur Erhöhung des "Sichtbereichs" des Lichtbogensensors, weil hierdurch der Bereich möglicher Einfallswinkel der von außen in den Lichterfassungsbereich eintretenden Lichtsignale vergrößert wird. Der Lichtbogensensor kann hierdurch mit anderen Worten auch schräg einfallende Lichtsignale zuverlässig erfassen. Dadurch dass zudem die Lichtleiter innerhalb des Lichtbogensensors derart geführt sind, dass ihre Enden genau aufeinander zu gerichtet sind, wird das Prüflichtsignal bei der Einkopplung in den empfangenden Lichtleiter kaum gedämpft, so dass im Vergleich zu der aus dem Stand der Technik bekannten schräg zueinander verlaufenden Ausrichtung der beiden Lichtleiter die Lichtleiter insgesamt länger ausgebildet werden können oder eine geringere Sendeleistung des Prüflichtsignals verwendet werden kann. Bei der genauen Positionierung der Enden der beiden Lichtleiter hat sich zudem gezeigt, dass ein kleiner Abstand (beispielsweise 1-2mm) der Enden zueinander ausreicht, um eine zuverlässige Einkopplung eines von einem Lichtbogen ausgesendeten Lichtsignals in den empfangenden Lichtleiter zu gewährleisten. Es ist sogar möglich den Abstand der Enden bis auf null (die Enden der Lichtleiter stoßen direkt aneinander) zu reduzieren, ohne die Empfangsempfindlichkeit zu stark zu verringern, da über die entstehende Stoßstelle immer noch eine vergleichsweise hohe Lichtleistung eines Lichtbogens eingekoppelt werden kann.

Erfindungsgemäß ist vorgesehen, dass die Führung derart ausgeformt ist, dass die den innerhalb des Sensorgehäuses angeordneten Enden der Lichtleiter abgewandten Enden an derselben Seite des Sensorgehäuses aus dem Sensorgehäuse herausgeführt werden.

Hierdurch wird die konstruktive Ausgestaltung des Lichtbogensensors weiter vereinfacht, da die optische Verbindung des Lichtbogensensors über die Lichtleiter mit einer Lichtbogenerkennungseinrichtung auf diese Weise nur von einer Seite des Sensors erfolgt.

Da hierbei ein gebogener Verlauf der Lichtleiter innerhalb des Sensorgehäuses erforderlich ist, ist vorgesehen, dass die Führung derart ausgestaltet ist, dass beide Lichtleiter innerhalb des Sensorgehäuses achsensymmetrisch sind und im Wesentlichen dieselbe, aufeinander zu gerichtete Krümmung erfahren.

Innerhalb des Sensorgehäuses werden die Lichtleiter erfindungsgemäß somit quasi achsensymmetrisch geführt. Dies hat neben einer einfachen konstruktiven Ausgestaltung insbesondere den Vorteil, dass sich die notwendige Krümmung der Lichtleiter - und die damit verbundene Materialbelastung der optisch leitenden Teile der Lichtleiter - auf beide Lichtleiter verteilt und nicht auf einen der Lichtleiter beschränkt ist.

Erfindungsgemäß ist zudem vorgesehen, dass die im Gehäusedeckel angeordnete Wölbung hinsichtlich ihres Materials und/oder ihrer Formgebung derart ausgestaltet ist, dass sie eine gewünschte Dämpfung eines von außerhalb des Sensorgehäuses in den Lichtempfangsbereich eintretenden Lichtsignals in der Weise bewirkt, dass nur Lichtsignale mit für einen Lichtbogen charakteristischen Ausgangslichtstärke mit einer signifikanten Einlasslichtstärke in den Lichtempfangsbereich eintreten.

Auf diese Weise kann der Lichtbogensensor einerseits besonders unempfindlich gegenüber Umgebungslicht ausgestaltet werden, das nicht von einem Lichtbogen herrührt. Beispielsweise können andere elektrische Komponenten der elektrischen Anlage Lichtimpulse erzeugen, es können innerhalb der Anlage temporär oder dauerhaft installierte Lichtquellen vorhanden sein, oder es kann Licht von außen in die Anlage eintreten, beispielsweise wenn die Anlage (ggf. zu Wartungszwecken) geöffnet wird. Solches Umgebungslicht weist üblicherweise eine deutliche geringere Lichtstärke als ein Lichtbogen auf und stellt zudem keine Gefahr für die elektrische Anlage dar, so dass eine mit dem Lichtbogensensor verbundene Lichtbogenerkennungseinrichtung bei bloßem Vorhandensein von Umgebungslicht entsprechend keinen Lichtbogen erkennen soll. Daher ist gemäß der letztgenannten Ausführungsform der Gehäusedeckel, speziell die in dem Gehäusedeckel vorhandene Wölbung, derart ausgebildet, dass eine gewünschte Dämpfung des von außen durch die Wölbung in den Lichtempfangsbereich des Lichtbogensensors eintretenden Lichtsignals erreicht wird. Auf diese Weise kann gewährleistet werden, dass lediglich die Lichtsignale mit einer hohen Ausgangslichtstärke, wie sie beim Auftreten von Lichtbögen entstehen, überhaupt mit einer signifikanten Einlasslichtstärke in den Lichterfassungsbereich eintreten und in den empfangenden Lichtleiter eingekoppelt werden.

Eine vorteilhafte Ausführungsform des erfindungsgemäßen optischen Lichtbogensensors sieht ferner vor, dass die Führung als in dem Gehäuseboden oder den Gehäusedeckel ausgeformte Rille ausgebildet ist.

Eine solche Führung kann konstruktiv sehr einfach, beispielsweise durch Fräsen oder durch entsprechende Ausgestaltung einer Spritzgussform hergestellt werden.

Gemäß einer weiteren vorteilhaften Ausführungsform des erfindungsgemäßen optischen Lichtbogensensors ist vorgesehen, dass der Gehäusedeckel aus einem Kunststoff ausgebildet ist. Als Kunststoff kann beispielsweise Teflon oder ein Polycarbonat (PC), Polyamid (PA), Acrylnitril-Butadien-Styrol (ABS) oder eine Kombination aus den genannten Kunststoffen (z.B. PC-ABS), vorzugsweise in naturbelassener oder weißer Färbung verwendet werden.

Die Ausgestaltung aus Kunststoff bietet neben der einfachen Herstellungs- und Verarbeitungsmöglichkeit (z.B. durch Fräsen oder Spritzguss) aufgrund seiner dielektrischen Eigenschaften den Vorteil, sich nicht maßgeblich auf die elektrischen Feldstärken innerhalb der elektrischen Anlage auszuwirken.

Eine weitere vorteilhafte Ausführungsform des erfindungsgemäßen optischen Lichtbogensensors sieht zudem vor, dass der Gehäuseboden eine Durchgangsbohrung zur Befestigung des Sensorgehäuses an einem Montagebereich aufweist und der Gehäusedeckel einen Montagedurchlass aufweist, der bei auf den Gehäuseboden aufgesetztem Gehäusedeckel einen Zugang zur Durchgangsbohrung im Gehäuseboden ermöglicht.

Auf diese Weise kann der Lichtbogensensor sehr einfach, beispielsweise durch eine auch bei zusammengebautem Lichtbogensensor zugängliche Schraube mit einem Montagebereich, beispielsweise einer Innenwand eines Schaltschranks, verbunden werden.

Gemäß einer weiteren vorteilhaften Ausführungsform des erfindungsgemäßen optischen Lichtbogensensors kann vorgesehen sein, dass im Gehäuseboden und im Gehäusedeckel hinsichtlich ihrer Lage zueinander korrespondierende Befestigungsmittel vorgesehen sind, die eine Befestigung des Gehäusedeckels am Gehäuseboden ermöglichen.

Hierdurch lässt sich das Sensorgehäuse einfach zusammenbauen. Als Befestigungsmittel können beispielsweise entsprechend zusammenwirkende Schraublöcher, Rast- bzw. Führungselemente oder Klipelemente dienen.

Eine weitere vorteilhafte Ausführungsform des erfindungsgemäßen optischen Lichtbogensensors sieht vor, dass ein Fixierelement vorgesehen ist, das im Bereich des Lichterfassungsbereichs in das Sensorgehäuse eingesetzt ist und die Ausrichtung der Enden der beiden Lichtleiter zueinander fixiert.

Durch Einsatz des Fixierelementes können die Enden der beiden Lichtleiter besonders präzise und stabil zueinander ausgerichtet werden.

In diesem Zusammenhang wird es zudem als vorteilhafte Ausführungsform des erfindungsgemäßen optischen Lichtbogensensors angesehen, wenn das Fixierelement derart ausgestaltet ist, dass die Enden der Lichtleiter von beiden Seiten in das Fixierelement einschiebbar sind.

Dies kann beispielsweise durch ein Fixierelement erreicht werden, dass eine Durchgangsbohrung aufweist, in die die Enden der Lichtleiter von beiden Seiten eingeschoben werden können. Anstelle einer Durchgangsbohrung können zur einfacheren Positionierung der Enden der Lichtleiter in dem Fixierelement jedoch auch zwei axial auf derselben Linie liegende Bohrungen von den beiden Seiten vorgesehen sein, die sich in der Mitte jedoch nicht treffen, sondern etwas Material stehen lassen. Hierdurch wird vermieden, dass die Enden der Lichtleiter in das Fixierelement mit unterschiedlichen Längen eingeschoben werden oder mit zu starkem Druck gegeneinander gepresst werden. Außerdem kann hierdurch die Größe des Spaltes zwischen den Enden der Lichtleiter beeinflusst werden, durch den Lichtsignale in den empfangenden Lichtleiter eingekoppelt werden können.

Das Fixierelement besteht vorzugsweise aus einem Kunststoff. Gemäß einer weiteren vorteilhaften Ausführungsform des optischen Lichtbogensensors ist zudem vorgesehen, dass das Fixierelement aus demselben Material besteht wie der Gehäusedeckel.

Auf diese Weise kann sichergestellt werden, dass die optischen Eigenschaften des Fixierelementes, insbesondere eine Dämpfung der von außen in den Lichtbogensensor eintretenden Lichtsignale, mit denen des Gehäusedeckels übereinstimmen.

Zur einfacheren Verbindung des optischen Lichtbogensensors mit einem Lichtbogenerkennungsmodul kann gemäß einer weiteren vorteilhaften Ausführungsform zudem vorgesehen sein, dass die von den innerhalb des Sensorgehäuses angeordneten Enden abgewandten Enden der Lichtleiter mit einem Steckverbinder zur Ankopplung an ein Lichtbogenerkennungsmodul versehen sind.

Sofern der optische Lichtbogensensor im Lichterfassungsbereich auch ein Fixierelement aufweist, kann im Zusammenhang mit der letztgenannten Ausführungsform gemäß einer vorteilhaften Weiterbildung auch vorgesehen sein, dass das Fixierelement hinsichtlich seines Materials und/oder seiner Formgebung derart ausgestaltet ist, dass es gemeinsam mit der im Gehäusedeckel angeordneten Wölbung die gewünschte Dämpfung eines von außerhalb des Sensorgehäuses in den Lichtempfangsbereich eintretenden Lichtsignals bewirkt.

In diesem Fall wirkt sich nämlich die gesamte Lichtstrecke innerhalb des Sensors, also der Gehäusedeckel mit der Wölbung und das Fixierelement auf die Dämpfung des hindurchtretenden Lichtsignals aus, so dass sowohl die Wölbung als auch das Fixierelement beim Erreichen der gewünschten Dämpfung einbezogen werden müssen.

Insgesamt hat es sich als vorteilhaft erwiesen, wenn die erreichte Dämpfung bei etwa -22dBm bis -26dBm liegt. Diese Dämpfung kann wie beschrieben entweder durch die Wölbung des Gehäusedeckels allein oder durch die Kombination aus Wölbung und Fixierelement erreicht werden. Dabei wird die Dämpfung insbesondere durch die Auswahl eines entsprechenden Materials, ggf. mit enthaltenen lichtdämpfenden Pigmenten, und/oder die Formgebung, insbesondere eine Wandstärke, der Wölbung und ggf. des Fixierelements beeinflusst.

Die in dieser Weise rein konstruktiv einstellbare Lichtdämpfung besitzt einen weiteren Vorteil. Neben Lichtbogensensoren der beschriebenen Art, die auch als Punktsensoren bezeichnet werden, weil sie eine Erfassung eines Lichtbogens von einem definierten Punkt der elektrischen Anlage aus vornehmen, sind auch sogenannte Linien- bzw. Schleifensensoren bekannt. Bei solchen Liniensensoren handelt es sich um durch die elektrische Anlage geführten Lichtleitern, deren Ummantelung zumindest in Teilen lichtdurchlässig ausgestaltet ist, so dass das bei einem Lichtbogen entstehende Lichtsignal über die Mantelfläche des Liniensensors in diesen eingekoppelt wird. Diese Liniensensoren weisen aufgrund der speziellen Art der Lichteinkopplung eine deutlich höhere Dämpfung auf. Durch die spezielle konstruktive Ausgestaltung des erfindungsgemäßen (Punkt-)Lichtbogensensors gemäß der beiden letztgenannten Ausführungsformen kann dieser mir einer Dämpfungscharakteristik ausgebildet werden, die derjenigen eines Liniensensors gleicht oder zumindest ähnelt. Beim Anschluss an ein Lichtbogenerkennungsmodul müssen daher keine Sensortyp-abhängigen Messbereichsumstellungen vorgenommen werden, sondern es können beide Sensortypen mit einer auf einen einheitlichen Messbereich ausgelegten Lichtbogenerkennungsmodules betrieben werden.

Gemäß einer weiteren vorteilhaften Ausführungsform des erfindungsgemäßen optischen Lichtbogensensors wird schließlich vorgeschlagen, dass die im Gehäusedeckel angeordnete Wölbung einen Teil einer Kugeloberfläche beschreibt und die Enden der beiden Lichtleiter im Mittelpunkt der von der Wölbung beschriebenen Kugel angeordnet sind.

Auf diese Weise kann ein besonders großer Einstrahlwinkel bei der Erfassung des von außen in den Lichtempfangsbereich eintretenden Lichtsignals gewährleistet werden.

Die Erfindung betrifft außerdem auch eine elektrische Lichtbogenerkennungseinrichtung mit einem Lichtbogenerkennungsmodul, das einen optischen Empfänger und einen optischen Sender aufweist, und einem Lichtbogensensor, der gemäß einem der Ansprüche 1 bis 11 ausgestaltet ist, wobei der optische Empfänger zum Empfangen von Lichtimpulsen optisch mit dem ersten Lichtleiter des Lichtbogensensors in Verbindung steht und der optische Sender zur Aussendung von Prüflichtimpulsen optisch mit dem zweiten Lichtleiter des Lichtbogensensors in Verbindung steht.

Hinsichtlich der erfindungsgemäßen Lichtbogenerkennungseinrichtung gelten alle zu dem erfindungsgemäßen Lichtbogensensor voranstehend und nachfolgend gemachten Ausführungen und umgekehrt in entsprechender Weise, insbesondere kann die erfindungsgemäße Lichtbogenerkennungseinrichtung einen Lichtbogensensor in jeder beliebigen der beschriebenen Ausführungsformen oder einer Kombination beliebiger Ausführungsformen umfassen. Auch hinsichtlich der Vorteile der erfindungsgemäßen Lichtbogenerkennungseinrichtung wird auf die zu dem erfindungsgemäßen Lichtbogensensor beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Lichtbogensensors und der erfindungsgemäßen Lichtbogenerkennungseinrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: eine schematische Darstellung einer auf etwaige Lichtbögen überwachten elektrischen Anlage;
- Figur 2: eine Lichtbogenerkennungseinrichtung mit einem optischen Lichtbogensensor;
- Figuren 3-5: ein Ausführungsbeispiel eines optischen Lichtbogensensors mit seinen Einzelteilen bzw. in montierter Version;
- Figur 6: der Lichtbogensensor der Figuren 3-5 in der Draufsicht; und
- Figur 7: der Lichtbogensensor gemäß Figur 6 in einer Schnittdarstellung.

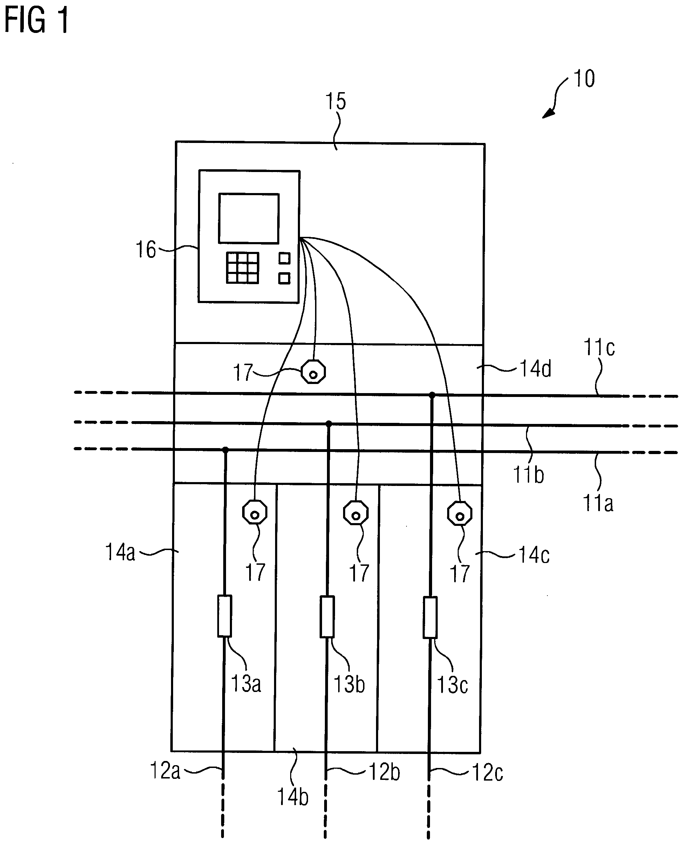

Figur 1 zeigt in schematischer Darstellung eine elektrische Anlage 10, bei der es sich beispielhaft um einen Mittelspannungsschaltschrank handelt. Die elektrische Anlage weist elektrischen Strom führende Komponenten, wie z.B. Sammelschienen 11a-c sowie von den Sammelschienen 11a-c abgehende Stichleitungen 12a-c auf. Die Stichleitungen 12a-c weisen außerdem elektrische Schalteinrichtungen 13a-c auf. Die den Strom führenden Komponenten sind in voneinander abgeschotteten Bereichen 14a-d der elektrischen Anlage 10 angeordnet und befinden sich im Beispiel der Figur 1 auf einem üblichen Mittelspannungsniveau im Spannungsbereich von ca. 1kV-52kV. Außerdem weist die elektrische Anlage einen Niederspannungsbereich 15 auf, in dem sich Mess-, Steuer- und Automatisierungsgeräte befinden, von denen in der Figur 1 lediglich beispielhaft ein Schutzgerät 16 gezeigt ist. Mit dem Schutzgerät 16 wird der Betrieb der elektrischen Anlage 10 überwacht, insbesondere muss das Auftreten von Fehlern, z.B. Kurzschlüssen erkannt werden, um etwaige Gegenmaßnahmen, wie das Abschalten fehlerbehafteter Komponenten, auslösen zu können.

Unter anderem überwacht das Schutzgerät 16 die elektrische Anlage 10 hinsichtlich des Auftretens elektrischer Lichtbögen, die beispielsweise bei einem Spannungsüberschlag zwischen zwei unterschiedliche elektrische Potentiale aufweisenden Teilen der elektrischen Anlage 10 auftreten können. Solche Spannungsüberschläge treten beispielsweise bei einer nicht ausreichenden elektrischen Isolierung innerhalb der elektrischen Anlage 10 auf und können zur Beschädigung oder Zerstörung der elektrischen Anlage 10 und zur Gefährdung von Betriebspersonal der elektrischen Anlage 10 führen. Daher sind Lichtbögen innerhalb der elektrischen Anlage 10 unmittelbar zu erkennen und durch Abschalten der betroffenen stromführenden Komponenten zum Erlöschen zu bringen.

Zur Überwachung der elektrischen Anlage 10 hinsichtlich des Auftretens von Lichtbögen sind in den einzelnen Bereichen 14a-d der elektrischen Anlage optische Lichtbogensensoren 17 angeordnet, die bei einem Lichtbogen entstehendes Licht über Lichtleiter an ein in dem Schutzgerät 16 integriertes Lichtbogenerkennungsmodul übermitteln. Mit dem Lichtbogenerkennungsmodul findet eine Auswertung der übermittelten Lichtsignale statt, beispielsweise indem die Lichtstärke des übermittelten Lichtsignals bzw. eine Amplitude eines aus dem Lichtsignal gebildeten elektrischen Signals mit einem Schwellenwert verglichen wird und bei Überschreitung des Schwellenwertes ein einen Lichtbogen angebendes Lichtbogen-Erkennungssignal gebildet wird. Das Schutzgerät 16 kann das Vorhandensein eines Lichtbogens allein anhand der durch die Lichtbogensensoren übermittelten Lichtsignale erkennen. Alternativ kann das Schutzgerät jedoch auch zusätzliche Parameter, wie beispielsweise Ströme in den einzelnen elektrischen Komponenten (z.B. den Sammelschienen 11a-c und den Stichleitungen 12a-c), Druckerhöhungen etc. heranziehen, um hiermit ein Lichtbogenfehlersignal verifizieren zu können. Bei vorliegendem und ggf. verifiziertem Lichtbogen-Erkennungssignal wird der betroffene Teil der elektrischen Anlage durch Öffnen einer zugehörigen Schalteinrichtung (z.B. einer der Schalteinrichtungen 13a-c) abgeschaltet.

Verschiedene Möglichkeiten der Erkennung eines Lichtbogens anhand von Signalen der Lichtbogensensoren und ggf. anderen Parametern sind dem Fachmann bereits aus dem Stand der Technik bekannt und sollen daher an dieser Stelle nicht weiter vertieft werden.

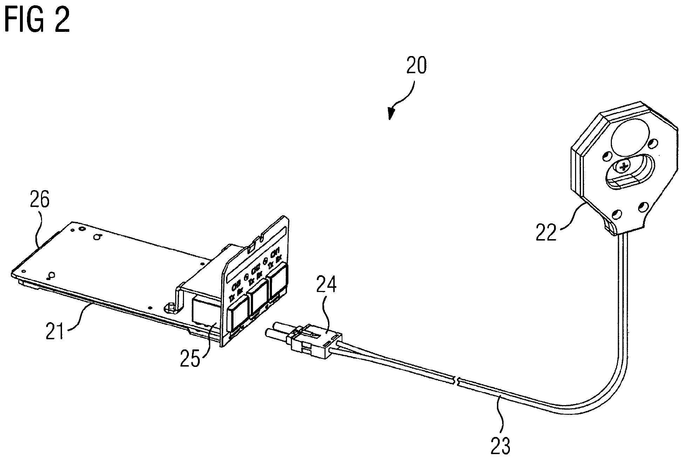

Figur 2 zeigt in schematischer Darstellung eine Lichtbogenerkennungseinrichtung 20, bestehend aus einem Lichtbogenerkennungsmodul 21 und einem mit diesem über ein Lichtleiterpaar 23 und einen optischen Steckverbinder 24 verbindbaren optischen Lichtbogensensor 22. Das Lichtbogenerkennungsmodul 21 kann beispielsweise in dem Schutzgerät 16 (vgl. Figur 1) eingebaut sein. Das beispielhafte Lichtbogenerkennungsmodul 21 gemäß Figur 2 ist als Einschubmodul für das Schutzgerät 16 ausgebildet und kann elektrisch geräteintern über einen in Figur 2 lediglich angedeuteten Flachstecker 26 mit der Elektronik des Schutzgerätes 16 verbunden werden. Das Lichtbogenerkennungsmodul 21 kann anstelle mit dem Schutzgerät 16 auch mit einem anderen die elektrische Anlage 10 überwachenden oder steuernden Automatisierungsgerät verbunden werden. Alternativ dazu kann es sich bei dem Lichtbogenerkennungsmodul 21 aber auch um ein separates elektrisches Modul handeln, das eigenständig eine Lichtbogenerkennung durchführt, oder das Lichtbogenerkennungsmodul kann als vollintegrierter Bestandteil des Schutzgeräts 16 ausgebildet sein.

Das Lichtbogenerkennungsmodul 21 weist einen optischen Empfänger und einen optischen Sender auf, die im Beispiel der Figur 2 in einem optischen Transceiverbaustein 25 zusammengefasst sind. Anstelle eines kombinierten Transceiverbausteins können jedoch auch separate optische Sender und Empfänger eingesetzt werden. Der optische Empfänger wandelt ein Lichtsignal, das von dem Lichtbogensensor 22 erfasst und über einen im Lichtleiterpaar 23 enthaltenen Empfangs-Lichtleiter an den Empfänger weiteregeleitet worden ist, in ein (analoges oder digitales) elektrisches Signal um, das nachfolgend mit einer in Figur 2 nicht gezeigten, auf dem Lichtbogenerkennungsmodul 21 oder im Schutzgerät 16 angeordneten, Auswerteelektronik daraufhin ausgewertet wird, ob es auf einen Lichtbogen in der elektrischen Anlage 10 hinweist.

Mittels des optischen Senders können Prüflichtsignale erzeugt und über einen im Lichtleiterpaar 23 enthaltenen Sende-Lichtleiter an den Lichtbogensensor 22 übermittelt werden. Die Prüflichtsignale werden zur Überwachung der korrekten Funktionsweise der Lichtbogenerkennungseinrichtung 20, insbesondere des Lichtbogensensors 22 sowie des Lichtleiterpaars 23, des Steckverbinders 24 und des optischen Empfängers, verwendet. Dazu werden die Prüflichtsignale im Lichtbogensensor 22 in den Empfangs-Lichtleiter eingekoppelt und über diesen zurück zum optischen Empfänger geführt. Wird ein ausgesendetes Prüflichtsignal im Empfänger korrekt empfangen, so wird hierdurch die korrekte Funktionsweise der Lichtbogenerkennungseinrichtung 20 erkannt.

Das in Figur 2 gezeigte Lichtbogenerkennungsmodul 21 weist neben dem Transceiverbaustein 25 noch zwei weitere Transceiverbausteine zum Anschluss weiterer optischer Lichtbogensensoren (desselben oder eines anderen Sensortyps) auf. Das Lichtbogenerkennungsmodul 21 kann abweichend zur Darstellung gemäß Figur 2 jedoch jede beliebige Anzahl von optischen Sendern und Empfängern bzw. Transceiverbausteinen aufweisen.

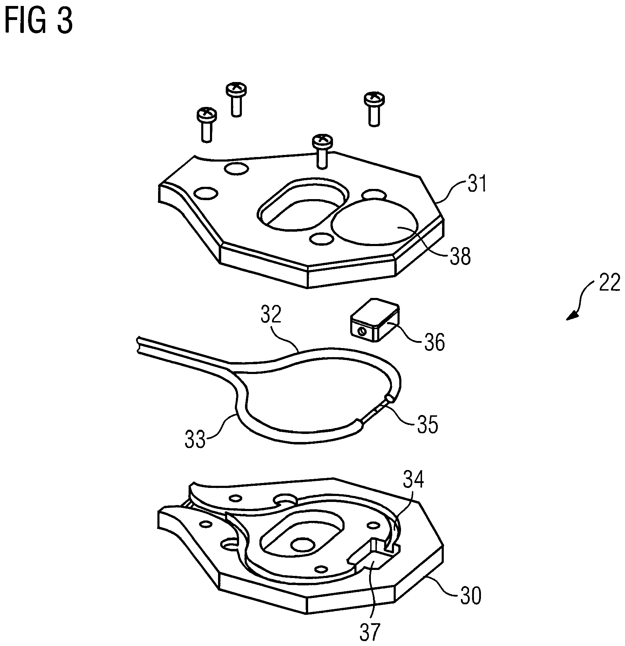

In den Figuren 3 bis 7 soll nachfolgend der konkrete Aufbau eines Ausführungsbeispiels des Lichtbogensensors 22 beschrieben werden.

Hierzu zeigt zunächst Figur 3 den Lichtbogensensor 22 mit seinen einzelnen Bestandteilen in einer Explosionsdarstellung. Der Lichtbogensensor 22 weist ein einen Gehäuseboden 30 und einen Gehäusedeckel 31 umfassendes Sensorgehäuse auf. In dem Ausführungsbeispiel der Figur 3 ist in den Gehäuseboden eine Führung 34 für einen die ersten Lichtleiter 32 und einen zweiten Lichtleiter 33 in Form einer Rille ausgebildet. Dabei ist die Führung 34 derart geformt, dass die beiden Lichtleiter an derselben Seite des Lichtbogensensors 22 in das Gehäuse hineingeführt und daraufhin in einer Weise umgebogen werden, dass ihre Enden genau auf einer Achse liegen, also parallel zueinander und aufeinander zu gerichtet sind. Dabei erfährt jeder der Lichtleiter im Wesentlichen dieselbe Krümmung, lediglich in achsensymmetrischer Form. Dabei werden die Lichtleiter zunächst nach außen und im weiteren Verlauf aufeinander zu umgebogen, so dass beide letztlich jeweils um 90° nach innen gebogen sind.

Als Lichtleiter können beispielsweise sogenannte POFs (Polymere optische Fasern) oder Glasfasern verwendet werden.

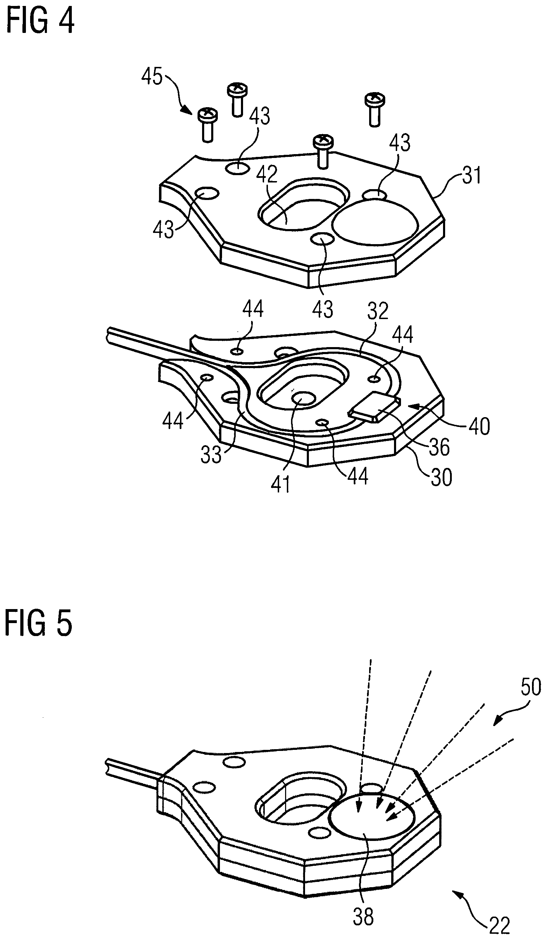

An den Enden der Lichtleiter 32, 33 ist deren Ummantelung entfernt worden, so dass, insbesondere an deren Stoßstelle 35, einerseits ein Lichtsignal von außen in den ersten Lichtleiter 32 eingekoppelt werden kann und andererseits ein Prüflichtsignal von dem zweiten Lichtleiter 33 an den ersten Lichtleiter 32 übertragen werden kann. Zur Fixierung der korrekten Ausrichtung der Enden der beiden Lichtleiter zueinander ist zudem ein Fixierelement 36 vorgesehen, in das die Enden der Lichtleiter 32, 33 von beiden Seiten eingeschoben werden können. Dabei kann die Bohrung im Fixierelement 36 als Durchgangsbohrung ausgebildet sein oder mittig in dem Fixierelement 36 ein Steg stehen gelassen worden sein, um die beiden Enden jeweils mit gleicher Länge in das Fixierelement 36 einschieben zu können. Das Fixierelement 36 kann nach dem Einschieben der Enden der beiden Lichtleiter 32, 33 in eine entsprechende Aussparung im Gehäuseboden 30 eingesetzt werden. Figur 4 zeigt den Lichtbogensensor 22, bei dem das Fixierelement 36 mit eingesetzten Lichtleitern 32, 33 in die Führung 34 des Gehäusebodens 30 eingesetzt worden sind. Der Bereich, in dem das Fixierelement 36 mit den Enden der beiden Lichtleiter 32, 33 angeordnet ist, wird nachfolgend als Lichterfassungsbereich 40 des Lichtbogensensors 22 bezeichnet, da dort die Einkopplung des Lichtsignals in den ersten Lichtleiter 32 stattfindet.

Der Gehäusedeckel 31 ist an seiner Oberseite im Wesentlichen flach ausgebildet. Lediglich im Bereich des Lichterfassungsbereichs 40 ist an dem Gehäusedeckel 31 eine nach außen gerichtete Wölbung 38 vorgesehen. Diese dient zur Vergrößerung des Einfallswinkelbereichs für Lichtsignals, die von außen in den Lichtbogensensor 22 eintreten und erhöht damit den "Sichtbereich" des Lichtbogensensors 22. Die Wölbung 37 ist dabei vorzugsweise einstückig mit dem Gehäusedeckel 31 und aus demselben Material wie dieser ausgebildet.

Der Gehäusedeckel 31 (inklusive der Wölbung) kann beispielsweise aus einem Kunststoff hergestellt sein. Dies ermöglicht eine einfache Herstellung durch Fräsen oder im Spritzgussverfahren. Als Kunststoff kann beispielsweise Teflon oder ein Polycarbonat (PC), Polyamid (PA), Acrylnitril-Butadien-Styrol (ABS) oder eine Kombination aus den genannten Kunststoffen (z.B. PC-ABS), vorzugsweise in naturbelassener oder weißer Färbung verwendet werden. Bei der Herstellung durch Spritzgießen wird der Sensordeckel vorzugsweise "ausgehöhlt", also in Schalenbauweise, ausgestaltet. Der Gehäuseboden 30 kann aus demselben Material oder einem beliebigen anderen geeigneten Material hergestellt sein. Dabei wird aufgrund der dielektrischen Eigenschaften und der einfachen Herstellung ebenfalls ein Kunststoff bevorzugt.

Der Gehäuseboden weist eine Durchgangsbohrung 41 auf, die eine einfache Befestigung des Lichtbogensensors 22 an einem Montagebereich der elektrischen Anlage, beispielsweise durch Festschrauben an einer Schaltschrankwand einer Mittelspannungsschaltanlage, ermöglicht. Korrespondierend zu der Durchgangsbohrung 41 weist der Gehäusedeckel einen Montagedurchlass auf, die bei auf den Gehäuseboden aufgesetztem Gehäusedeckel für ein Werkzeug einen Zugang zu der Durchgangsbohrung ermöglicht.

Zudem weisen der Gehäuseboden 30 und der Gehäusedeckel 31 hinsichtlich ihrer Lage zueinander korrespondierende Befestigungsmittel 43, 44 auf, die in dem gezeigten Ausführungsbeispiel als Schraublöcher für entsprechende Schrauben 45 ausgebildet sind, und die ein Verbinden des Gehäusedeckels 31 mit dem Gehäuseboden 30 ermöglichen. Alternativ zu einer Schraubverbindung könnten die Befestigungsmittel auch Rastelemente, Klipelemente, Führungselemente oder ähnliche geeignete Mittel umfassen.

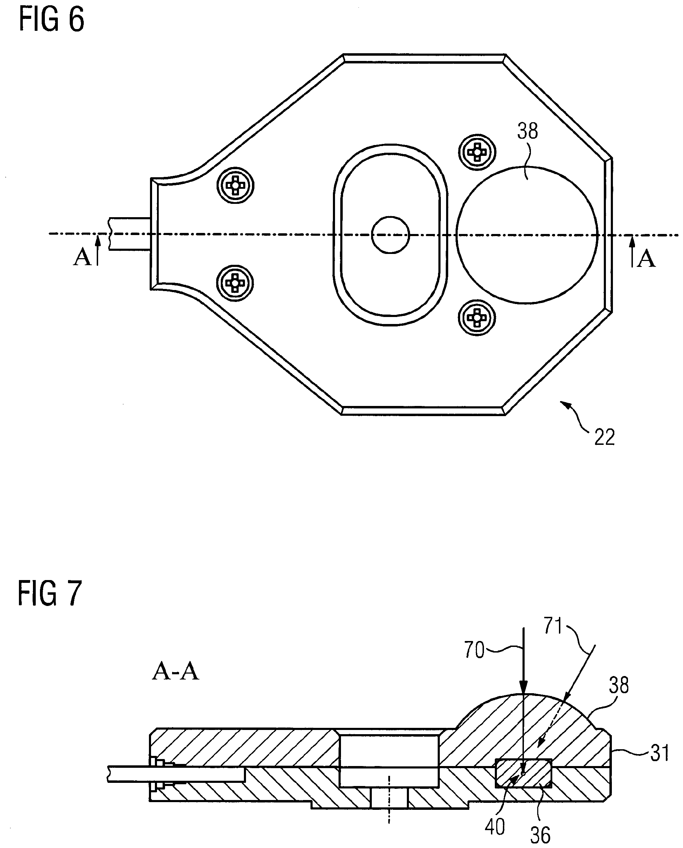

Figur 5 zeigt den Lichtbogensensor 22 im zusammengebauten Zustand. Schematisch ist einfallendes Licht, das beispielsweise von einem Lichtbogen in der elektrischen Anlage herrührt, in Form von gestrichelten Pfeilen 50 angedeutet, die auf die Wölbung 38 treffen und durch diese hindurchtreten. Figuren 6 und 7 zeigen den Lichtbogensensor in der Draufsicht bzw. im Schnitt. Der Gehäusedeckel 31 und insbesondere die Wölbung 38 sind dabei hinsichtlich Material und/oder Formgebung derart ausgestaltet, dass ein von außen auftreffendes Lichtsignal eine gewisse Dämpfung erfährt. Hierzu können beispielsweise Farbpigmente oder Füllstoffe in dem Kunststoff enthalten sein, aus dem der Gehäusedeckel besteht. Sofern - wie es bei dem gezeigten Ausführungsbeispiel der Fall ist - ein Fixierelement 36 vorgesehen ist, das zumindest teilweise im Pfad der von außen auf die Enden der Lichtleiter eintreffenden Lichtsignale liegt, muss das Fixierelement 36 hinsichtlich Material und Formgebung beim Erreichen des gewünschten Dämpfungseffekts berücksichtigt werden.

Die Dämpfung der Lichtsignale von außen sollte durch entsprechende Ausgestaltung des Gehäusedeckels 31 mit der Wölbung 38 und ggf. des Fixierelementes 36 so eingestellt werden, dass zwar Lichtsignale 70, die von einem Lichtbogen in der elektrischen Anlage stammen und eine entsprechend hohe Ausgangslichtstärke aufweisen, mit signifikanter Einlasslichtstärke zum Lichterfassungsbereich 40 und letztlich zum Ende des ersten Lichtleiters hindurch gelangen und in das Ende des ersten Lichtleiters eingekoppelt werden können, Lichtsignale 71 aber, die von anderen Lichtquellen mit geringerer Lichtintensität bzw. Ausgangslichtstärke stammen, hingegen nicht oder nur vergleichsweise schwach zum Lichterfassungsbereich 40 hindurch gelangen, so dass sie nicht oder nur schwach in den Lichtleiter eingekoppelt werden und über einen entsprechend gewählten Schwellenwert bei der Auswertung von einem Lichtsignal eines Lichtbogens unterschieden werden können. Eine durch den Gehäusedeckel 31 mit der Wölbung 38 und ggf. das Fixierelement 36 erreichte Dämpfung für von außen einfallendes Licht kann beispielsweise zwischen -22 dBm und -26dBm liegen.

Um den Sichtbereich des Lichtbogensensors 22 so groß wie möglich auszugestalten, kann die Wölbung 38 einen Teil einer Kugeloberfläche beschreiben, wobei im Mittelpunkt der beschriebenen Kugel zumindest näherungsweise der Lichterfassungsbereich 40 mit dem Stoßpunkt der Enden der Lichtleiter liegen sollte.

## Patentansprüche

1. Optischer Lichtbogensensor (22) zur Erfassung eines Lichtbogens in einer elektrischen Anlage (10) mit
- einem einen Gehäuseboden (30) und einen auf den Gehäuseboden (30) aufsetzbaren Gehäusedeckel (31) aufweisenden Sensorgehäuse;
- einem ersten Lichtleiter (32), dessen eines Ende zur Erfassung eines von einem Lichtbogen erzeugten Lichtsignals innerhalb des Sensorgehäuses angeordnet ist;
- einem zweiten Lichtleiter (33), dessen eines Ende zur Aussendung eines Prüflichtsignals innerhalb des Sensorgehäuses angeordnet ist, wobei die innerhalb des Sensorgehäuses angeordneten Enden der beiden Lichtleiter (32, 33) miteinander in optischer Verbindung stehen;
- das Sensorgehäuse eine Führung (34) aufweist, die die beiden Lichtleiter (32, 33) innerhalb des Sensorgehäuses derart führt, dass ihre jeweiligen Enden in einem Lichterfassungsbereich (40) parallel zueinander und direkt aufeinander zu gerichtet angeordnet sind;
- der Gehäusedeckel (31) im Wesentlichen flach ausgebildet ist und im Bereich des Lichterfassungsbereichs (40) eine nach außen gerichtete Wölbung (38) aufweist, die aus demselben Material ausgestaltet ist wie der Gehäusedeckel (31); und
- die Führung (34) derart ausgeformt ist, dass die den innerhalb des Sensorgehäuses angeordneten Enden der Lichtleiter (32, 33) abgewandten Enden an derselben Seite des Sensorgehäuses aus dem Sensorgehäuse herausgeführt werden;
- die Führung (34) derart ausgestaltet ist, dass beide Lichtleiter (32, 33) innerhalb des Sensorgehäuses achsensymmetrisch sind und im Wesentlichen dieselbe, aufeinander zu gerichtete Krümmung erfahren;
**dadurch gekennzeichnet, dass** die im Gehäusedeckel (31) angeordnete Wölbung (38) hinsichtlich ihres Materials und/oder ihrer Formgebung derart ausgestaltet ist, dass sie eine gewünschte Dämpfung eines von au-ßerhalb des Sensorgehäuses in den Lichterfassungsbereich (40) eintretenden Lichtsignals in der Weise bewirkt, dass nur Lichtsignale mit einer für einen Lichtbogen charakteristischen Ausgangslichtstärke mit einer signifikanten Einlasslichtstärke in den Lichterfassungsbereich (40) eintreten.

2. Optischer Lichtbogensensor (22) nach Anspruch 1,
**dadurch gekennzeichnet, dass**
- die Führung (34) als in dem Gehäuseboden (30) oder den Gehäusedeckel (31) ausgeformte Rille ausgebildet ist.

3. Optischer Lichtbogensensor (22) nach Anspruch 1 oder 2,
**dadurch gekennzeichnet, dass**
- der Gehäusedeckel (31) aus einem Kunststoff ausgebildet ist.

4. Optischer Lichtbogensensor (22) nach einem der Ansprüche 1 bis 3,
**dadurch gekennzeichnet, dass**
- der Gehäuseboden (30) eine Durchgangsbohrung (41) zur Befestigung des Sensorgehäuses an einem Montagebereich aufweist; und
- der Gehäusedeckel (31) einen Montagedurchlass (42) aufweist, der bei auf den Gehäuseboden (30) aufgesetztem Gehäusedeckel (31) einen Zugang zur Durchgangsbohrung (41) im Gehäuseboden (30) ermöglicht.

5. Optischer Lichtbogensensor (22) nach einem der vorangehenden Ansprüche,
**dadurch gekennzeichnet, dass**
- im Gehäuseboden (30) und im Gehäusedeckel (31) hinsichtlich ihrer Lage zueinander korrespondierende Befestigungsmittel (43, 44) vorgesehen sind, die eine Befestigung des Gehäusedeckels (31) am Gehäuseboden (30) ermöglichen.

6. Optischer Lichtbogensensor (22) nach einem der vorangehenden Ansprüche,
**dadurch gekennzeichnet, dass**
- ein Fixierelement (36) vorgesehen ist, das im Bereich des Lichterfassungsbereichs (40) in das Sensorgehäuse eingesetzt ist und die Ausrichtung der Enden der beiden Lichtleiter (32, 33) zueinander fixiert.

7. Optischer Lichtbogensensor (22) nach Anspruch 6,
**dadurch gekennzeichnet, dass**
- das Fixierelement (36) derart ausgestaltet ist, dass die Enden der Lichtleiter (32, 33) von beiden Seiten in das Fixierelement (36) einschiebbar sind.

8. Optischer Lichtbogensensor (22) nach einem der vorangehenden Ansprüche 6 oder 7,
**dadurch gekennzeichnet, dass**
- das Fixierelement (36) aus demselben Material besteht wie der Gehäusedeckel (31).

9. Optischer Lichtbogensensor (22) nach einem der vorangehenden Ansprüche,
**dadurch gekennzeichnet, dass**
- die von den innerhalb des Sensorgehäuses angeordneten Enden abgewandten Enden der Lichtleiter (32, 33) mit einem Steckverbinder (24) zur Ankopplung an ein Lichtbogenerkennungsmodul (21) versehen sind.

10. Optischer Lichtbogensensor (22) nach auf Anspruch 6,
**dadurch gekennzeichnet, dass**
- das Fixierelement (36) hinsichtlich seines Materials und/oder seiner Formgebung derart ausgestaltet ist, dass es gemeinsam mit der im Gehäusedeckel (31) angeordneten Wölbung (38) die gewünschte Dämpfung eines von außerhalb des Sensorgehäuses in den Lichterfassungsbereich (40) eintretenden Lichtsignals bewirkt.

11. Optischer Lichtbogensensor (22) nach einem der vorangehenden Ansprüche,
**dadurch gekennzeichnet, dass**
- die im Gehäusedeckel (31) angeordnete Wölbung (38) einen Teil einer Kugeloberfläche beschreibt; und
- die Enden der beiden Lichtleiter (32, 33) im Mittelpunkt der von der Wölbung (38) beschriebenen Kugel angeordnet sind.

12. Elektrische Lichtbogenerkennungseinrichtung (20) mit einem
- Lichtbogenerkennungsmodul (21), das einen optischen Empfänger und einen optischen Sender aufweist; und
- einem Lichtbogensensor (22), der gemäß einem der Ansprüche 1 bis 11 ausgestaltet ist, wobei
- der optische Empfänger zum Empfangen von Lichtsignalen optisch mit dem ersten Lichtleiter (32) des Lichtbogensensors (22) in Verbindung steht und der optische Sender zur Aussendung von Prüflichtsignalen optisch mit dem zweiten Lichtleiter (33) des Lichtbogensensors (22) in Verbindung steht.

## Claims

1. Optical arc sensor (22) for detecting an arc in an electrical installation (10) comprising
- a sensor housing having a housing base (30) and a housing cover (31) capable of being placed onto the housing base (30);
- a first optical waveguide (32), one end of which is arranged within the sensor housing for the purpose of detecting a light signal generated by an arc;
- a second optical waveguide (33), one end of which is arranged within the sensor housing for the purpose of emitting a test light signal, wherein the ends of the two optical waveguides (32, 33) that are arranged within the sensor housing are optically connected to one another;
- the sensor housing has a guide (34), which guides the two optical waveguides (32, 33) within the sensor housing in such a way that their respective ends are arranged parallel to one another and in a manner directed directly towards one another in a light detection region (40);
- the housing cover (31) is embodied in a substantially flat fashion and has, in the region of the light detection region (40), an outwardly directed bulge (38) configured from the same material as the housing cover (31); and
- the guide (34) is shaped in such a way that the ends facing away from those ends of the optical waveguides (32, 33) that are arranged within the sensor housing are guided out of the sensor housing at the same side of the sensor housing;
- the guide (34) is configured in such a way that both optical waveguides (32, 33) are axially symmetrical within the sensor housing and experience substantially the same curvature directed towards one another;
**characterized in that**
the bulge (38) arranged in the housing cover (31) is configured with regard to its material and/or its shaping such that it brings about a desired damping of a light signal that enters the light detection region (40) from outside the sensor housing in such a way that only light signals having an initial light intensity that is characteristic of an arc enter the light detection region (40) with a significant entry light intensity.

2. Optical arc sensor (22) according to Claim 1,
**characterized in that**
- the guide (34) is embodied as a groove shaped in the housing base (30) or the housing cover (31).

3. Optical arc sensor (22) according to Claim 1 or 2,
**characterized in that**
- the housing cover (31) is formed from a plastic.

4. Optical arc sensor (22) according to any of Claims 1 to 3,
**characterized in that**
- the housing base (30) has a through hole (41) for securing the sensor housing to a mounting region; and
- the housing cover (31) has a mounting passage (42) enabling access to the through hole (41) in the housing base (30) when the housing cover (31) has been placed onto the housing base (30) .

5. Optical arc sensor (22) according to any of the preceding claims,
**characterized in that**
- provision is made of securing means (43, 44) corresponding to one another with regard to their position in the housing base (30) and in the housing cover (31), said securing means enabling the housing cover (31) to be secured to the housing base (30).

6. Optical arc sensor (22) according to any of the preceding claims,
**characterized in that**
- a fixing element (36) is provided, which is inserted into the sensor housing in the region of the light detection region (40) and fixes the orientation of the ends of the two optical waveguides (32, 33) with respect to one another.

7. Optical arc sensor (22) according to Claim 6,
**characterized in that**
- the fixing element (36) is configured in such a way that the ends of the optical waveguides (32, 33) are insertable into the fixing element (36) from both sides.

8. Optical arc sensor (22) according to either of the preceding Claims 6 and 7,
**characterized in that**
- the fixing element (36) consists of the same material as the housing cover (31).

9. Optical arc sensor (22) according to any of the preceding claims,
**characterized in that**
- those ends of the optical waveguides (32, 33) which face away from the ends arranged within the sensor housing are provided with a plug connector (24) for coupling to an arc recognition module (21).

10. Optical arc sensor (22) according to Claim 6,
**characterized in that**
- the fixing element (36) is configured with regard to its material and/or its shaping such that it brings about, together with the bulge (38) arranged in the housing cover (31), the desired damping of a light signal entering the light detection region (40) from outside the sensor housing.

11. Optical arc sensor (22) according to any of the preceding claims,
**characterized in that**
- the bulge (38) arranged in the housing cover (31) describes a part of a surface of a sphere; and
- the ends of the two optical waveguides (32, 33) are arranged at the midpoint of the sphere described by the bulge (38).

12. Electrical arc recognition device (20) comprising
- an arc recognition module (21) having an optical receiver and an optical transmitter; and
- an arc sensor (22) configured according to any of Claims 1 to 11, wherein
- the optical receiver for receiving light signals is optically connected to the first optical waveguide (32) of the arc sensor (22) and the optical transmitter for emitting test light signals is optically connected to the second optical waveguide (33) of the arc sensor (22).

## Revendications

1. Capteur (22) optique d'arc électrique pour la détection d'un arc électrique dans une installation (10) électrique, comprenant
- un boîtier de capteur, ayant un fond (30) et un couvercle (31) pouvant être mis sur le fond (30);
- une première fibre (32) optique, dont un bout est disposé dans le boîtier du capteur pour la détection d'un signal lumineux produit par un arc électrique;
- une deuxième fibre (33) optique, dont un bout est disposé dans le boîtier du capteur pour l'émission d'un signal lumineux de contrôle, les bouts, disposés dans le boîtier du capteur, des deux fibres (32, 33) optiques étant en liaison optique l'un avec l'autre;
- le boîtier du capteur a un guidage (34), qui guide les deux fibres (32, 33) optiques à l'intérieur du boîtier du capteur, de manière à ce que leur bout respectif soit parallèle l'un à l'autre dans une partie (40) de détection de la lumière et soit dirigé directement l'un sur l'autre;
- le couvercle (31) du boîtier est sensiblement plat et a, dans la région de la partie (40) de détection de la lumière, un bombement (38) dirigé vers l'extérieur, qui est en le même matériau que le couvercle (31) du boîtier; et
- le guidage est conformé de manière à ce que les bouts à l'opposé des bouts, disposés à l'intérieur du boîtier du capteur, des fibres (32, 33) optiques sortent du boîtier du capteur du même côté du boîtier du capteur;
- le guidage (34) est conformé de manière à ce que les deux fibres (32, 33) optiques soient à symétrie axiale à l'intérieur du boîtier du capteur et subissent sensiblement la même courbure dirigée l'une sur l'autre;
**caractérisé en ce que**
le bombement (38), disposé dans le couvercle (33) du boîtier, est conformé, en ce qui concerne son matériau et/ou son façonnage, de manière à provoquer une atténuation souhaitée d'un signal lumineux entrant de l'extérieur du boîtier du capteur dans la partie (40) de détection de la lumière, en ce sens que seuls des signaux lumineux, ayant une intensité lumineuse de sortie caractéristique d'un arc électrique, entrent dans la partie (40) de détection de la lumière en ayant une intensité d'entrée significative.

2. Capteur (22) optique d'arc électrique suivant la revendication 1,
**caractérisé en ce que**
- le guidage (34) est constitué sous la forme de rainures formées dans le fond (30) du boîtier ou dans le couvercle (31) du boîtier.

3. Capteur (22) optique d'arc électrique suivant la revendication 1 ou 2,
**caractérisé en ce que**
- le couvercle (31) du boîtier est en une matière plastique.

4. Capteur (22) optique d'arc électrique suivant l'une des revendications 1 à 3,
**caractérisé en ce que**
- le fond (30) du boîtier a un trou (41) traversant pour fixer le boîtier du capteur à une partie de montage; et
- le couvercle (31) du boîtier a un passage (42) de montage, qui rend possible, lorsque le couvercle (31) du boîtier est mis sur le fond (30) du boîtier, un accès au trou (41) de passage du fond (30) du boîtier.

5. Capteur (22) optique d'arc électrique suivant l'une des revendications précédentes,
**caractérisé en ce que**
- dans le fond (30) du boîtier et dans le couvercle (31) du boîtier sont prévus des moyens (43, 44) de fixation, qui se correspondent en ce qui concerne leur position, et qui rendent possible une fixation du couvercle (31) du boîtier au fond (30) du boîtier.

6. Capteur (22) optique d'arc électrique suivant l'une des revendications précédentes,
**caractérisé en ce que**
- il est prévu un élément (36) d'immobilisation, qui est inséré dans le boîtier du capteur dans la région de la partie (40) de détection de la lumière et qui fixe la direction des bouts des deux fibres (32, 33) optiques l'une par rapport à l'autre.

7. Capteur (22) optique d'arc électrique suivant la revendication 6,
**caractérisé en ce que**
- l'élément (36) d'immobilisation est conformé, de manière à ce que les bouts des fibres (32, 33) optiques puissent être insérés des deux côtés dans l'élément (36) d'immobilisation.

8. Capteur (22) optique d'arc électrique suivant l'une des revendications précédentes 6 ou 7,
**caractérisé en ce que**
- l'élément (36) d'immobilisation est en le même matériau que le couvercle (31) du boîtier.

9. Capteur (22) optique d'arc électrique suivant l'une des revendications précédentes,
**caractérisé en ce que**
- les bouts, à l'opposé des bouts disposés à l'intérieur du boîtier du capteur, des fibres (32, 33) optiques sont pourvus d'un connecteur (24) à enfichage d'accouplement à un module (21) de détection d'arc électrique.

10. Capteur (22) optique d'arc électrique suivant la revendication 6,
**caractérisé en ce que**
- l'élément (36) d'immobilisation est conformé, en ce qui concerne son matériau et/ou son façonnage, de manière à provoquer, conjointement avec le bombement (38) disposé dans le couvercle (31) du boîtier, l'atténuation souhaitée d'un signal lumineux entrant dans la partie (40) de détection de la lumière de l'extérieur du boîtier du capteur.

11. Capteur (22) optique d'arc électrique suivant l'une des revendications précédentes,
**caractérisé en ce que**
- le bombement (38), disposé dans le couvercle (31) du boîtier, décrit une partie d'une surface sphérique; et
les bouts des deux fibres (32, 33) optiques sont disposés au centre de la sphère décrite par le bombement (38).

12. Dispositif (20) électrique de détection d'arc électrique comprenant
- un module (21) de détection d'arc électrique, qui a un récepteur optique et un émetteur optique; et
- un capteur (22) d'arc électrique, qui est conformé suivant lune des revendications 1 à 11, dans lequel
- le récepteur optique de réception de signaux lumineux est en liaison optiquement avec la première fibre (32) optique du capteur (22) d'arc électrique et l'émetteur optique d'émission de signaux lumineux de contrôle est en liaison optiquement avec la deuxième fibre (33) optique du capteur (22) d'arc électrique.
